(19) Europäisches Patentamt
European Patent Office
Office européen des brevets

(11) **EP 3 706 077 A1**

(12) **EUROPEAN PATENT APPLICATION**

(43) Date of publication:
**09.09.2020 Bulletin 2020/37**

(51) Int Cl.:
**G06T 7/73** *(2017.01)*   **G06T 11/00** *(2006.01)*

(21) Application number: **19161535.0**

(22) Date of filing: **08.03.2019**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN** | (71) Applicant: **Nokia Technologies Oy**<br>**02610 Espoo (FI)**<br><br>(72) Inventor: **Pokhrel, Niroj**<br>**02610 Espoo (FI)**<br><br>(74) Representative: **Nokia EPO representatives**<br>**Nokia Technologies Oy**<br>**Karakaari 7**<br>**02610 Espoo (FI)** |

(54) **IMAGE SYSTEM**

(57)   There is provided an apparatus comprising means for receiving image data from an imaging system that includes at least part of an area of interest, wherein the area of interest comprises at least one elevated structure, determining a line that extends from the imaging system to a boundary of the area of interest, using three dimensional data to find a first angle between the line and a boundary of the at least one elevated structure, determine a second angle between the line and a boundary of the field of view of the apparatus, compare the first angle to the second angle, and when the comparison determines that the second angle is greater than the first angle, obscuring image data between the two angles.

# EP 3 706 077 A1

**Description**

*Field*

The present application relates to a method, apparatus, and computer program.

*Background*

When capturing images and recording videos in public, the captured image data is at risk of comprising private and/or sensitive information. To address this, various techniques have been developed to blur or otherwise obscure potentially sensitive information. For example, an algorithm may be configured to detect certain objects in image data, such as a face or a license plate, and blur those detected objects. These techniques may be applied post-recordal.
Depending on the technique(s) used, processing image data in such a way can very resource intensive on the apparatus performing the processing.

*Summary*

According to a first aspect, there is provided an apparatus comprising means for: receiving image data from an imaging system that includes at least part of an area of interest, wherein the area of interest comprises at least one elevated structure; determining a line that extends from the imaging system to a boundary of the area of interest; using three dimensional data to find a first angle between the line and a boundary of the at least one elevated structure; determining a second angle between the line and a boundary of the field of view of the apparatus; comparing the first angle to the second angle; and when the comparison determines that the second angle is greater than the first angle, obscuring image data between the two angles.
The means may be for, when the comparison determines that the second angle is less than the first angle, not obscuring the image data.
The means may be for: calculating a plurality of travel paths for moving at least part of the apparatus to change a viewpoint of the image data; estimating, for at least one travel path, a cost of obscuring to be performed on image data resulting from that travel path; and selecting a travel path in dependence on the determined cost of obscuring.
The travel paths may comprise movements of a pivoted support in the apparatus that is configured to rotate a lens for capturing the image data relative to the apparatus.
The travel paths may comprise macroscopic movements of the apparatus relative to the region of interest.
The means for selecting a travel path may be further dependent on an indication of a time limit in which the travel path is to be completed.
The means may be for: using a range finding mechanism to determine the three dimensional information, wherein the imaging system and the range finding mechanism have respective associated fields of view, wherein the field of view of the apparatus is the smaller of the field of view of the range finding mechanism and the field of view of the imaging system.
According to a second aspect, there is provided a method comprising: receiving image data from an imaging system that includes at least part of an area of interest, wherein the area of interest comprises at least one elevated structure; determining a line that extends from the imaging system to a boundary of the area of interest; using three dimensional data to find a first angle between the line and a boundary of the at least one elevated structure; determining a second angle between the line and a boundary of the field of view of the apparatus; comparing the first angle to the second angle; and when the comparison determines that the second angle is greater than the first angle, obscuring image data between the two angles.
The method may comprise, when the comparison determines that the second angle is less than the first angle, not obscuring the image data.
The method may comprise: calculating a plurality of travel paths for moving at least part of the apparatus to change a viewpoint of the image data; estimating, for at least one travel path, a cost of obscuring to be performed on image data resulting from that travel path; and selecting a travel path in dependence on the determined cost of obscuring.
The travel paths may comprise movements of a pivoted support in an apparatus in which the method is performed, the pivoted support being configured to rotate a lens for capturing the image data relative to the apparatus.
The travel paths may comprise macroscopic movements of an apparatus in which the method is performed relative to the region of interest.
The method may comprise selecting a travel path in dependence on an indication of a time limit in which the travel path is to be completed.
The method may comprise: using a range finding mechanism to determine the three dimensional information, wherein the imaging system and the range finding mechanism have respective associated fields of view, wherein the field of view of the apparatus is the smaller of the field of view of the range finding mechanism and the field of view of the imaging system.

According to a third aspect, there is provided a computer program comprising instructions for causing an apparatus to perform at least the following: receive image data from an imaging system that includes at least part of an area of interest, wherein the area of interest comprises at least one elevated structure; determine a line that extends from the imaging system to a boundary of the area of interest; use three dimensional data to find a first angle between the line and a boundary of the at least one elevated structure; determine a second angle between the line and a boundary of the field of view of the apparatus; compare the first angle to the second angle; and when the comparison determines that the second angle is greater than the first angle, obscure image data between the two angles.

The apparatus may further be caused to, when the comparison determines that the second angle is less than the first angle, not obscure the image data.

The apparatus may further be caused to: calculate a plurality of travel paths for moving at least part of the apparatus to change a viewpoint of the image data; estimate, for at least one travel path, a cost of obscuring to be performed on image data resulting from that travel path; and selecting a travel path in dependence on the determined cost of obscuring.

The travel paths may comprise movements of a pivoted support in the apparatus that is configured to rotate a lens for capturing the image data relative to the apparatus.

The travel paths may comprise macroscopic movements of the apparatus relative to the region of interest.

The apparatus may further be caused to select a travel path in dependence on an indication of a time limit in which the travel path is to be completed.

The apparatus may further be caused to, use a range finding mechanism to determine the three dimensional information, wherein the imaging system and the range finding mechanism have respective associated fields of view, wherein the field of view of the apparatus is the smaller of the field of view of the range finding mechanism and the field of view of the imaging system.

According to a fourth aspect, there is provided a non-transitory computer readable medium comprising program instructions stored thereon for performing at least the following: receiving image data from an imaging system that includes at least part of an area of interest, wherein the area of interest comprises at least one elevated structure; determine a line that extends from the imaging system to a boundary of the area of interest; using three dimensional data to find a first angle between the line and a boundary of the at least one elevated structure; determining a second angle between the line and a boundary of the field of view of the apparatus; comparing the first angle to the second angle; and when the comparison determines that the second angle is greater than the first angle, obscuring image data between the two angles.

According to a fifth aspect, there is provided a computer readable medium comprising program instructions stored thereon for performing at least the following: receiving image data from an imaging system that includes at least part of an area of interest, wherein the area of interest comprises at least one elevated structure; determine a line that extends from the imaging system to a boundary of the area of interest; using three dimensional data to find a first angle between the line and a boundary of the at least one elevated structure; determining a second angle between the line and a boundary of the field of view of the apparatus; comparing the first angle to the second angle; and when the comparison determines that the second angle is greater than the first angle, obscuring image data between the two angles.

The following clauses may apply to the fourth and fifth aspects.

The program instructions may be for performing, when the comparison determines that the second angle is less than the first angle, not obscuring the image data.

The program instructions may be for performing: calculating a plurality of travel paths for moving at least part of the apparatus to change a viewpoint of the image data; estimating, for at least one travel path, a cost of obscuring to be performed on image data resulting from that travel path; and selecting a travel path in dependence on the determined cost of obscuring.

The travel paths may comprise movements of a pivoted support in the apparatus that is configured to rotate a lens for capturing the image data relative to the apparatus.

The travel paths may comprise macroscopic movements of the apparatus relative to the region of interest.

The program instructions may be for performing selecting a travel path in dependence on an indication of a time limit in which the travel path is to be completed.

The program instructions may be for performing using a range finding mechanism to determine the three dimensional information, wherein the imaging system and the range finding mechanism have respective associated fields of view, wherein the field of view of the apparatus is the smaller of the field of view of the range finding mechanism and the field of view of the imaging system.

According to a sixth aspect, there is provided an apparatus comprising: receiving circuitry configured to receive image data from an imaging system that includes at least part of an area of interest, wherein the area of interest comprises at least one elevated structure; determining circuitry configured to determine a line that extends from the imaging system to a boundary of the area of interest; using circuitry configured to use three dimensional data to find a first angle between the line and a boundary of the at least one elevated structure; determining circuitry configured to determine a second angle between the line and a boundary of the field of view of the apparatus; comparing circuitry configured to compare the first angle to the second angle; and obscuring circuitry configured to, when the comparison determines that the second angle is greater than the first angle, obscure image data between the two angles.

The apparatus may comprise circuitry configured to, when the comparison determines that the second angle is less than the first angle, not obscure the image data.

The apparatus may comprise: calculating circuitry configured to calculate a plurality of travel paths for moving at least part of the apparatus to change a viewpoint of the image data; estimating circuitry configured to, for at least one travel path, estimate a cost of obscuring to be performed on image data resulting from that travel path; and selecting circuitry configured to select a travel path in dependence on the determined cost of obscuring.

The travel paths may comprise movements of a pivoted support in the apparatus that is configured to rotate a lens for capturing the image data relative to the apparatus.

The travel paths may comprise macroscopic movements of the apparatus relative to the region of interest.

The selecting circuitry may be configured to select a travel path in dependence on an indication of a time limit in which the travel path is to be completed.

The apparatus may comprise: using circuitry configured to use a range finding mechanism to determine the three dimensional information, wherein the imaging system and the range finding mechanism have respective associated fields of view, wherein the field of view of the apparatus is the smaller of the field of view of the range finding mechanism and the field of view of the imaging system.

According to a seventh aspect, there is provided an apparatus comprising at least one processor and at least one memory including computer program code; the at least one memory and the computer program code configured to, with the at least one processor, cause the apparatus at least to perform: receive image data from an imaging system that includes at least part of an area of interest, wherein the area of interest comprises at least one elevated structure; determine a line that extends from the imaging system to a boundary of the area of interest; use three dimensional data to find a first angle between the line and a boundary of the at least one elevated structure; determine a second angle between the line and a boundary of the field of view of the apparatus; compare the first angle to the second angle; and when the comparison determines that the second angle is greater than the first angle, obscure image data between the two angles.

The apparatus may further be caused to, when the comparison determines that the second angle is less than the first angle, not obscure the image data.

The apparatus may further be caused to: calculate a plurality of travel paths for moving at least part of the apparatus to change a viewpoint of the image data; estimate, for at least one travel path, a cost of obscuring to be performed on image data resulting from that travel path; and selecting a travel path in dependence on the determined cost of obscuring.

The travel paths may comprise movements of a pivoted support in the apparatus that is configured to rotate a lens for capturing the image data relative to the apparatus.

The travel paths may comprise macroscopic movements of the apparatus relative to the region of interest.

The apparatus may further be caused to select a travel path in dependence on an indication of a time limit in which the travel path is to be completed.

The apparatus may further be caused to, use a range finding mechanism to determine the three dimensional information, wherein the imaging system and the range finding mechanism have respective associated fields of view, wherein the field of view of the apparatus is the smaller of the field of view of the range finding mechanism and the field of view of the imaging system.

An apparatus comprising: means for receiving image data from an imaging system that includes at least part of an area of interest, wherein the area of interest comprises at least one elevated structure; means for determining a line that extends from the imaging system to a boundary of the area of interest; means for using three dimensional data to find a first angle between the line and a boundary of the at least one elevated structure; means for determining a second angle between the line and a boundary of the field of view of the apparatus; means for comparing the first angle to the second angle; and means for, when the comparison determines that the second angle is greater than the first angle, obscuring image data between the two angles.

*Description of Figures*

Examples will now be described with reference to the accompanying Figures in which:

Figure 1 shows a schematic diagram of an example apparatus;
Figure 2 shows an example flow chart;

Figures 3 and 4A, 4B, and 4C show schematic diagrams of example arrangements;
Figures 5 and 6 show example flow charts; and
Figure 7 shows a schematic diagram of an example arrangement;

*Detailed description*

In general, the following disclosure relates to reducing the processing burden associated with an apparatus processing image data to obscure at least part of the image data.

In particular, the following relates to technical mechanisms for simplifying the obscuring (e.g. blurring) of parts of image data in order to produce processed image data that has a reduced likelihood of comprising private and/or sensitive information compared to the unobscured image data.

For simplicity, the following will discuss image capture and obscuring image data in conjunction with image data captured by drones. However, it is understood that the same principles and mechanisms may apply in respect of other image capturing devices.

During drone surveillance or flight, a drone may record video (also referred to herein as image data) of regions beyond an intended surveillance area or otherwise some area designated to be imaged (an "area of interest").

Because of this, a captured image may comprise image data that is considered to be private or sensitive, recordal of which may be impermissible or even illegal. Therefore, some drones may be provided with software for blurring or otherwise obscuring part of received/recorded image data. Time may be saved by configuring the drone to perform the obscuring itself. However, limited resources may be available in the drone to perform such resource intensive operations like blurring, as the drone's resources may be needed for other operations such as flying. Therefore, these operations may alternatively be performed by some other apparatus that is physically remote from the drone, particularly if the processing operations for achieving this are resource intensive.

Certain techniques have been provided that can blur or otherwise obscure objects within image data. In particular, obscuring of image data may be performed using any suitable processing technique. For example, blurring may be accomplished by any of Gaussian distribution, averaging, Huffman encoding, fractals and/or Fourier transform. Aside from blurring, image data may be obscured by superposing other image data on top of the object to be blurred ("masking"), by pixelating, morphing or warping.

It can sometimes be difficult to determine which parts of image data needs to be obscured and to what degree. To address this, various mechanisms have been proposed that obscure image data in dependence on various factors.

One mechanism, for example, may be based on a relative movement between the camera on the drone and the area being imaged.

Another example mechanism may identify specific objects within an image and selectively apply blurring to those specific objects that are determined to be outside of the area of interest. Depending on the mechanism applied, the processing used for performing the mechanism can be very resource intensive. This may cause the image data to be transferred from the drone to another entity for processing, which may make the image data more vulnerable to interception and abuse. Transferring the recorded image data to another entity may also take some time, especially when every part of the image data comprises higher resolution image data.

As another example mechanism, an apparatus will use information such as the drone altitude, the global positioning system (GPS) location for example, a field of view of the camera on the drone and a gimbal orientation (a pivoted supported for controlling the rotational direction of the camera) to determine an approximate two dimensional projection of the imaged area onto the ground. This projection is compared to the region of interest to determine what lies within the region of interest and what lies outside of the region of interest. Specific objects lying in an area of the image data that do not overlap with the region of interest are subsequently blurred. The area to be blurred may, for example, be based on a predefined restricted area. Areas that are restricted may be identified when planning an area to be imaged, and their identification may influence route planning decisions to guide a drone to the area of interest. In particular, route planning may be performed in advance of a drone's flight based on the knowledge of restricted area and time restrictions for the drone's flight.

To address the above identified issues, the following proposes mechanisms for simplifying the process for obscuring image data.

As a first described technique, an apparatus is provided that is configured to use three dimensional data to determine which objects lie inside an area of interest and to obscure captured image data relating to anything lying outside of the area of interest. A route for the drone to take to capture the most of the area of interest with minimum time may also result in processing savings, and is described with reference to later Figures.

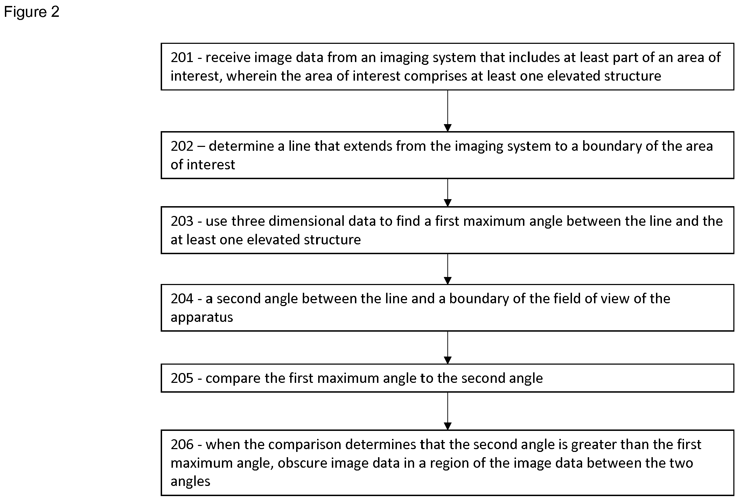

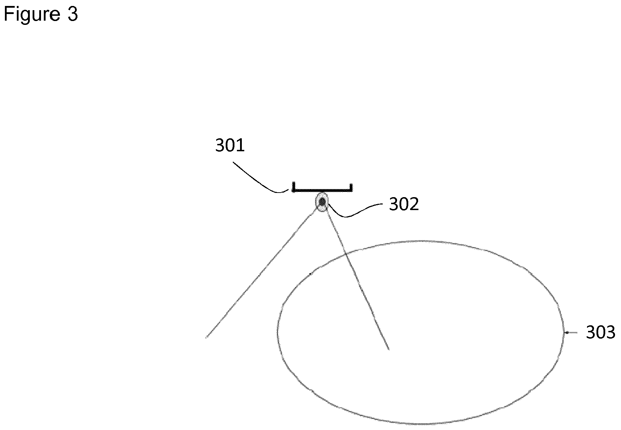

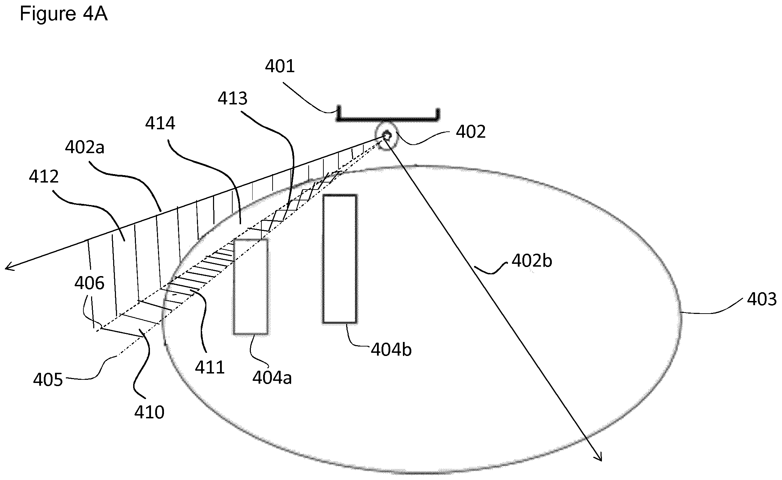

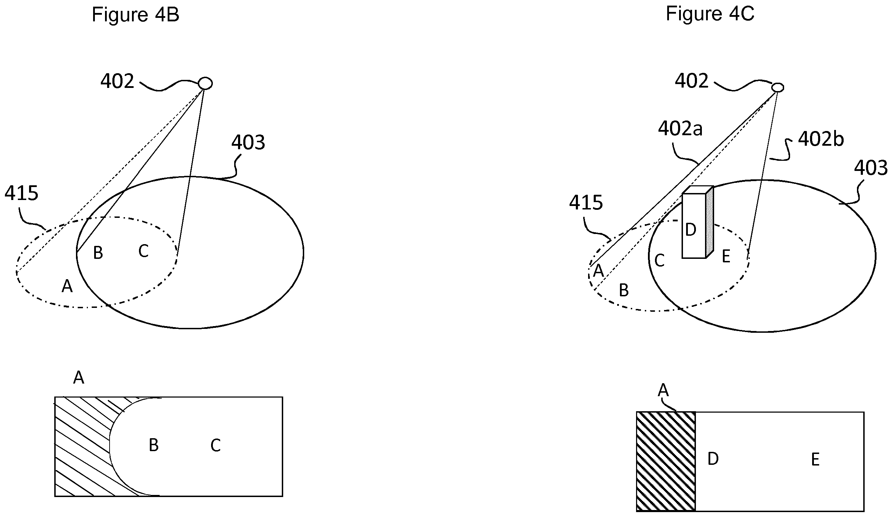

The technique for using three dimensional data is discussed further with reference to the flowchart of Figure 2 and the example environment depicted in Figures 3 and 4.

Figure 3 depicts a drone 301 carrying a camera 302 via a gimbal support. An area of interest is denoted by an oval 303. The camera 302 has a field of view denoted by two lines 304a, 304b emanating from the camera 302.

It is understood that the area of interest may take any two dimensional shape. The area of interest may be a two-dimensional region that has been determined and/or designated as being of interest by an operator of the drone. Alternatively or in addition, the area of interest may be determined autonomously by either the drone or by another apparatus.

Figure 2 is a flowchart illustrating operations that may be performed by an apparatus. The apparatus may form part of the drone of Figure 3, or may form part of another apparatus remote from the drone of Figure 3.

At 201, an apparatus is configured to receive image data that includes at least part of an area of interest that comprises at least one elevated structure.

It is understood that the term elevated structure is used to generally indicate a three dimensional object.

The image data may be received internally from a camera located on the apparatus itself. The image data may be received from a camera remote from the apparatus itself. The image data may be received from pre-stored data, such as digital maps. The elevated structure may be a building, a tree, a hill, etc. An example environment showing such a setup is depicted in Figure 4A, in which the apparatus is, for simplicity, depicted as part of a drone carrying a camera.

Figure 4A shows a drone 401 carrying a camera 402 via a gimbal support. An area of interest is denoted by an oval 403. The camera 402 has a field of view denoted by two lines 402a, 402b, emanating from the camera 402. Also shown are elevated structures 404a, 404b. The solid lines with arrows 402a, 402b emanating from the camera 402 denotes the boundary of the field of view of the lens of the camera. The dashed lines 405, 406 respectively indicate lines from a lens of the imaging system to respective boundaries of the area of interest seen past edges of the elevated structures 404a, 404b. Lines 405, 406 extend from the centre of the lens of the imaging system to respective points on the boundary on the area of interest that is perpendicular to the current image data. The area between line 405 and 406 that lies between elevated structures 404a and 404b is indicated as 413. The area between lines 405 and 406 that lies after elevated structure 404a (and is blocked from the field of view of the camera 402) and that lies within the area of interest is indicated as 411. The area between lines 405 and 406 that lies after elevated structure 404a (and is blocked from the field of view of the camera 402) and that lies outside of the area of interest is indicated as 410. The area between line 406 and 402a that lies within the area of interest is indicated as 414. The area between line 406 and 402a that lies outside of the area of interest is indicated as 412.

Area 412 represents an area to be blurred. Areas 410, 411 represent areas that are blocked by the elevated structures 404a, 404b. In the absence of the elevated structures 404a, 404b, these areas would be blurred. However, as there are elevated structures in the way, these angular areas are not blurred. Areas 413 and 414 represent regions without image blurring.

Figures 4B and 4C illustrate further aspects of this arrangement.

Figure 4B shows an area of interest 403 as an oval, with a second, dashed oval 415 representing a region captured by camera 402. As can be seen in the "image" pictured below these ovals, the recorded image blurs those regions of the captured region 415 outside of the area of interest 403. The blurring is indicated by shading in Figure 4B.

Figure 4C shows an area of interest 403 as an oval, with a second, dashed oval 415 representing a region captured by camera 402, and defined by 402a, 402b. Present in the captured region 415 is an elevated structure D. A dashed line from the camera 402 to a boundary of the elevated structure D projects into a region outside the area of interest 403. As can be seen in the "image" pictured below these ovals, the recorded image blurs those regions outside of the boundary of the elevated structure, which theoretically includes at least part of an area outside the area of interest 403. When comparing the "images" below Figures 4B and 4C, it can be seen that the presence of an elevated structure, such as a building, may therefore be used to produce an image having less blurring than when elevated structures are not present. Thus the resources of the drone may be used for longer flying time or reducing the charging of battery of the drone.

At 202, the apparatus is configured to determine a line that extends from a lens of the imaging system to a boundary of the area of interest. In particular, the line may extend from the centre of the lens of the imaging system to a point on the boundary on the area of interest that is perpendicular to the current image data (as illustrated in the example of Figure 4A).

At 203, the apparatus is configured to use three dimensional data to find a first angle between the line and a boundary (e.g. an outermost edge) of the at least one elevated structure.

The term "first angle" may refer to the maximum angle an object (elevated structure) makes with respect to the line.

The three dimensional data may comprise information that is obtained prior to the image being captured. The three dimensional data may comprise three dimensional information that is obtained by the drone during operation. The three dimensional data may comprise both information that is obtained prior to the image being captured and information that is obtained by the drone during operation.

As one example, of three dimensional data may that is obtained prior to the image being captured, the three dimensional information may be a pre-stored elevation and/or three dimensional map that has a height of objects on the map. The objects may therefore be considered as macro features, such as buildings, trees, hills, etc. The objects may also be substantially static, so that their size and/or location remains substantially constant. For example, a building commonly lasts many years and without changing its appearance over that time. The information provided on such a map may be used by the drone to perform three dimensional camera mapping (i.e. when two dimensional image data is fitted to a three dimensional model). The resultant three dimensional mapping may be used to predict a projection region accurately.

As an example of three dimensional data that is obtained by the drone during operation, the drone may use range sensors to measure the distance of objects towards the region defined by the camera field of view. For example, a measuring device such as lidar (a surveying method that measures a distance to a target using pulsed laser light) may be used to find obstacles on the path and a distance away from the camera lens in the area of interest. Lidar use is very resource demanding, and so the use of lidar during a flight may be curtailed until there's a specific need. In other words, lidar may be activated after a certain time during flight in dependence on the predetermined route plan for the drone and digital map data. In addition, or in the alternate, lidar can be stopped at certain times whilst in use in dependence on at least one factor. Example factors include a predetermined schedule, a planned route and a distance to an object located in the area of interest. The lidar (or some other range-finding mechanism) and the camera may have a similar field of view. However, if this is not the case, the smaller field of view of the camera and the lidar/other range finding mechanism is used as the field of view of the apparatus. Three dimensional information determined in this way may thus be used to increase an accuracy of predicting a projection region.

At 204, the apparatus is configured to determine a second angle that extends between the line and a boundary of the field of view of the apparatus. This boundary may be the closest part of the boundary of the field of view to the line.

At 205, the apparatus is configured to compare the first angle with the second angle.

At 206, when the comparison determines that the second angle is greater than the first angle, the apparatus is configured to obscure image data in the region of the image between the two angles. The apparatus may be configured to obscure all of the image data in this region between the two angles. This would enable the apparatus to conserve processing cycles as it does not have to identify specific objects that lie outside of the area of interest. Image data corresponding to the overlap between the first angle may not be obscured.

When the comparison determines that the second angle is smaller than the first angle, the apparatus is configured to allow the image data to be recorded and/or transmitted to another entity without obscuring any of the image data.

The above described mechanism may be applied in real time. The above described mechanism may be applied to earlier recorded image data.

Once the image data has been processed as described above, it may be stored in memory and/or transmitted to another apparatus for storing. Any stored image data may further be made the subject of other blurring-based analytic techniques. These other blurring-based analytic techniques may use pre-stored image data of the region of interest. The process for performing this may be expensive in terms of processor costs. However, if a map has been created with location information, then a search algorithm may be applied that is configured to focus on a fraction of the search area. The fraction may be a small fraction. For example, the search algorithm may be configured to focus on less than half of the search area. This will increase the speed of the process. Information such as a current location and angle of view of the camera for a particular scene in image data may be used for selecting the pre-stored image data for comparing for the blurring-based analytic techniques. The selected images for comparing will be a fraction (i.e. less than all) of the stored images.

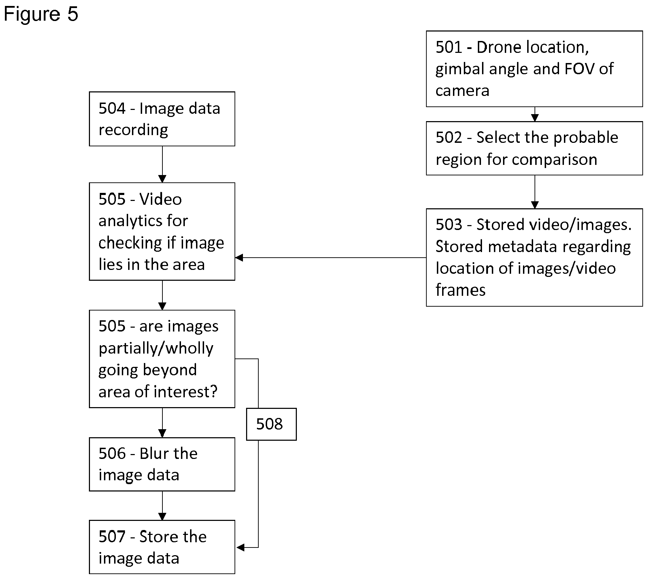

A flow chart illustrating this technique is shown in Figure 5.

At 501, an apparatus is configured to determine its location, an angle of a pivoted support for a camera lens on the apparatus and a field of view of the camera.

At 502, the apparatus is configured to use this information to select a probable region of interest in image data.

At 503, the apparatus is configured to store image data relating to the selected region of interest.

Steps 504 to 508 may be performed by the apparatus or by another apparatus that is remote to the apparatus performing steps 501 to 503. For simplicity in the following, it will be assumed that the same apparatus is performing all of the steps of Figure 5.

At 504, image data is recorded.

At 505, an image analytic programme is applied to the recorded image data to determine if the recorded image data lies in the area of interest. This is determined by comparing it to the image data stored in step 503.

At 506, it is determined whether the image data from step 504 partially or wholly lie beyond the region of interest.

At 507, if it does, the image data from step 504 partially or wholly lies beyond the region of interest, the image data is blurred.

At 508, if the image data from step 504 does not partially or wholly lie beyond the region of interest, or after the image data is blurred in step 507, the image data from step 504 or step 507 is stored.

The following provides an example discussion of the above-mentioned techniques.

When image data is recorded, an apparatus may calculate what region is occupied by the image capture. For this, a farthest region a picture from the camera may be determined. This may also involve approximating rectangular projections of buildings onto the group, and involve maximum angles based on the field of view of the camera. This may define the corresponding regions on the ground.

However, not all of these projected regions may lie within the area of interest. For that, we may calculate what portion of the image lies within a field of view by finding the angular field of view that is created up to the boundary of the region of interest. Based on a current position of the drone, the position of the boundary and the field of view of the camera, an approximate calculationof what portion of the image is going to be beyond the area of interest may be determined. This rough portion may be used for subsequently blurring the image. By applying blurring/obscuring on an approximated portion of image data to be blurred, the apparatus may save in processing resources.

In the presence of an elevated structure, the portion of an image to be blurred may vary. Now, based on the position and height of the elevated structure and of the drone, the region of interest and the field of view of the camera, a region of mage data that needs to be blurred may be calculated. Based on the position of the elevated structure, the region that needs to be blurred may vary.

The above-described techniques utilise the calculation of angles to find and determine a region in which blurring/obscuring of image data is to be applied. The blurring may be performed on a maximum amount of camera view that does beyond the area of interest, based on the position and height of the elevated structures.

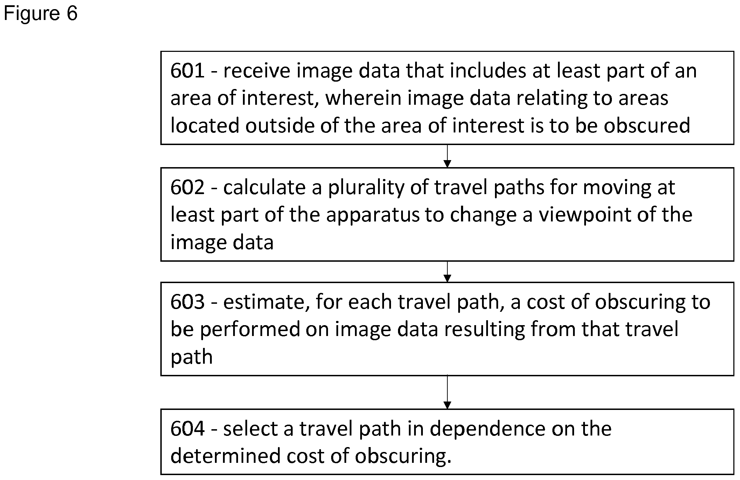

Another mechanism that may be used to reduce the processing burden for blurring/obscuring image data is now described with reference to Figures 6 to 8.

In general, the following described technique relates to determining an efficient movement for a gimbal (pivoted support) for a camera mounted in a drone. This is a pre-emptive mechanism that it is used to select which camera views to record for reducing the amount of obscuring of image data to be performed during post-processing. This is achieved by seeking to maximise the amount of an area of interest that is recorded when changing a view recorded by the camera.

For clarity in the following, the term "gimbal" will be used to generally indicate a pivoted support, and may refer to either a single gimbal (which rotates about a single axis), or multiple gimbals combined to rotate about respective multiple axes. A gimbal may generally be a pivoted support in the form of a Cardan suspension that allows the rotation of an object about a single axis. A set of three gimbals, one mounted on the other with orthogonal pivot axes, may be used to allow an object mounted on the innermost gimbal to remain independent of the rotation of its support. Such 3-axis (yaw, roll and pitch) gimbals are used in stabilization systems designed to allow for shooting and/or recording without camera vibration or shake. Motor powered gimbals are able to keep the camera level on all axes as the camera is moved, and/or to direct the view of the camera towards specific locations/views. A ground control system (GCS) may be additionally provided in order to allow a user to remotely and actively control the motors so as to purposefully aim the gimbal and, thus, the camera at a desired part of a scene.

Figure 6 is a flowchart showing operations that may be performed by an apparatus. The apparatus may form part of a drone. The apparatus may be remote from the drone, and may be configured to transmit an instruction to the drone regarding which travel path to take (as described further below).

At 601, an apparatus is configured to receive image data from an imaging system (e.g. a camera) that includes at least part of an area of interest, wherein image data outside of the area of interest is intended to be obscured. Whether or not something is intended to be obscured may be defined by an operator of the apparatus.

At 602, the apparatus is configured to calculate a plurality of travel paths for moving at least part of the apparatus to change a viewpoint of the image data. These travel paths may comprise at least one of a lateral movement of the apparatus along any axis, a rotation of the apparatus and/or a rotation of the lens of a camera on the apparatus (e.g. via a gimbal/pivoted support).

At 603, the apparatus is configured to estimate, for at least one travel path, a cost of obscuring to be performed on image data resulting from that travel path. The cost may be dependent on a processing cost associated with processing the resulting image data to obscure areas outside of the region of interest. This may be estimated by determining image data that is likely to be taken along the at least one travel path and calculating, for the at least one travel path, the fraction of the total image data relating to the area of interest. As image data relating to areas outside of the area of interest is to be obscured, those travel paths calculated as having a higher fraction of image data relating to the area of interest are likely to use less processing.

At 604, the apparatus is configured to select a travel path in dependence on the determined cost of obscuring. In particular, the apparatus may be configured to select a travel path that has the lowest determined cost of any of the travel paths. The apparatus may be configured to select a travel path in dependence on both the determined cost of obscuring and on at least one other factor, such as the overall travel time along the travel path, an urgency associated with reaching the destination, etc.

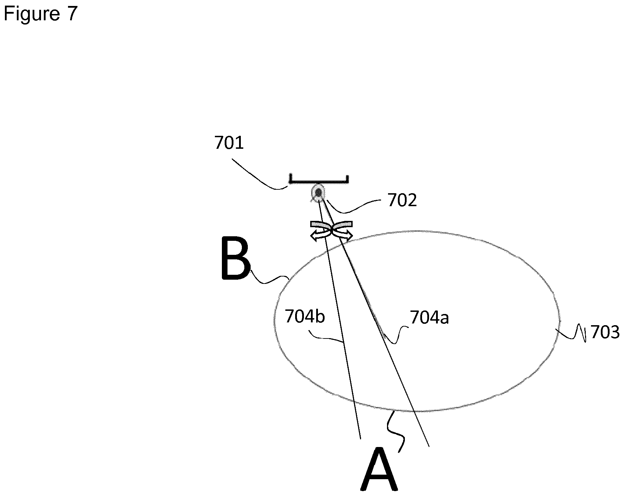

An example system associated with this mechanism is discussed in relation to Figure 7.

Figure 7 shows a drone 701 carrying a camera 702 configured to capture image data, including image data of region of interest 703. The lines 704a and 704b emanating from the camera 702 depict different rotation axes about which the gimbal can rotate the camera/camera lens. Line 704a depicts a clockwise rotation. Line 704b depicts an anticlockwise location. Also shown are points A and B, which lie on a boundary of an area of interest.

In a first configuration, the gimbal is pointing the camera towards point A. The gimbal can rotate the lens about three axes (roll, pitch and yaw). The rotation angle along the three axes may be adjusted so that the camera view is predominantly of the area of interest, even if this means that point A is not central to the camera view. It is assumed that the drone 701 receives an instruction (or is otherwise guided) to rotate the camera view to include an object located at point B, rather than at point A. If the view is moved clockwise, most of the camera view will comprise image data beyond the area of interest. However, if the camera view is moved anticlockwise, the camera view will comprise more image data of the area of interest than not. Therefore in this example there may be a lower associated processing cost for rotating the camera view anticlockwise as there is less blurring to be performed when rotating the camera view anticlockwise than when rotating the camera view clockwise. Therefore, in general, the selection of the movement may be based on capturing a greater amount of the area of interest.

The actual calculation of cost may be based on the calculation of rotation angle for pitch and yaw angle. Different parameters may be used to finally select the travel path (which includes at least a gimbal rotation).

As the above-described techniques relating to optimising the travel path/gimbal movement mean that less image data needs to be obscured, the drone may be configured to perform the obscuring itself before transmitting the obscured image data to another device. This would render the overall system more secure as it would decrease the likelihood of a malignant third part obtaining the unobscured image data. It is understood that the above-mentioned obscuring mechanisms of Figure 2 to 5 may be applied to image data recorded as per Figures 6 and 7.

The apparatus may be configured to calculate the plurality of flight paths in response to a command to change the viewpoint of the image data. This command may originate from the apparatus itself acting autonomously. This command may originate from an operator of the apparatus.

The apparatus may use at least two parameters to calculate the cost: the cost in processing resources to perform blurring on different image data along the at least one travel path and a cost in time to reach the ultimate viewpoint (e.g. of B in Figure 7). The cost may therefore be expressed as:

$$\text{Cost} = \text{cost of blurring} + k*\text{cost of time for reaching new orientation}$$

where k may be any positive value, including a fraction. The cost(s) of blurring may be determined based on the computation power of drones/apparatus performing the blurring. For example, drones that have high computation power have a lower cost of blurring than drones that have lower computation power. Similarly, k is a constant representative of the relative importance between the cost of blurring and the cost of timing far reaching a new orientation. Usually, the cost of time required to reach the destination/target angles by gimbals is unimportant and in such cases k may have a value of less than 1.

The cost of time for reaching the new orientation can depend on the urgency of the drone to reach the determinations once the gimbal command is issued. For example, the drone may determine that the captured view needs to be changed as soon as possible (for example, in emergency situations). In this case, the cost associated with the time is high. In other situations, it may be low.

Further, as the cost of time used to acquire a new view by rotating a camera lens is relatively unimportant, in such cases k may be less than 1.

A user may be monitoring the image data and decide to change the view (e.g. if s/he spots something interesting towards the periphery of the feed). In this case, a user may issue a command to the drone to control the gimbal to direct the camera view in the direction of interest. During this process, the path for the movement of the gimbal is computed based on the process of Figure 6 and the gimbal is intelligently rotated as the new view is found.

As discussed above, the new view may be achieved, at least in part, by a macro-movement of the drone itself (e.g. laterally along any axis). The new view may be achieved, at least in part, by a rotation of the entire drone about any axis. The new view may be achieved, at least in part, by a rotation of the pivoted support/gimbal about any rotation axis. Combinations of these ways for achieving a new view may also be performed.

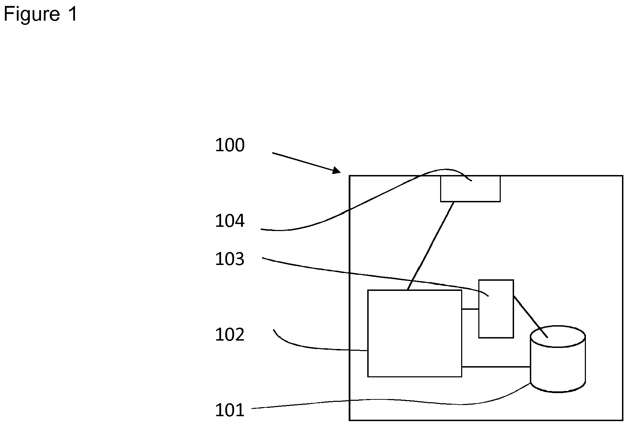

An example apparatus for performing at least some of the above-described techniques is shown in Figure 1. Figure 1 shows an example of a control apparatus 100 for a drone. The method may be implanted in a single control apparatus or across more than one control apparatus. The control apparatus 100 can be arranged to provide control on communications in the service area of the system. The control apparatus 100 comprises at least one memory 101, at least one data processing unit 102, 103 and an input/output interface 104. Via the interface the control apparatus can be coupled to a receiver and a transmitter of the drone. The receiver and/or the transmitter may be implemented as a radio front end or a remote radio head. For example the control apparatus 100 can be configured to execute an appropriate software code to provide the control functions. Control apparatus 100 may be included in a chipset or modem apparatus. A chipset or modem apparatus which includes apparatus 100 may be included in the drone.

It is understood that references in the above to camera also includes any image recordal devices configured to receive image data and to, at least temporarily, store the image data. The camera may be further configured to perform image processing on the image data, for example, to blur or otherwise obscure at least part of the received image data.

It is understood that references in the above to "drone" may refer to any autonomous vehicle (also referred to as an unmanned vehicle or an unmanned autonomous vehicle), and may be terrestrial and/or aerial.

It should be understood that each block of the flowchart of the Figures and any combination thereof may be implemented by various means or their combinations, such as hardware, software, firmware, one or more processors and/or circuitry.

It is also noted herein that while the above describes example embodiments, there are several variations and modifications which may be made to the disclosed solution without departing from the scope of the present invention.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

In general, the various embodiments may be implemented in hardware or special purpose circuits, software, logic or any combination thereof. Some aspects of the invention may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims. Indeed there is a further embodiment comprising a combination of one or more embodiments with any of the other embodiments previously discussed.

**Claims**

1.  An apparatus comprising means for:

    receiving image data from an imaging system that includes at least part of an area of interest, wherein the area of interest comprises at least one elevated structure;
    determining a line that extends from the imaging system to a boundary of the area of interest;
    using three dimensional data to find a first angle between the line and a boundary of the at least one elevated structure;
    determining a second angle between the line and a boundary of the field of view of the apparatus;
    comparing the first angle to the second angle; and
    when the comparison determines that the second angle is greater than the first angle, obscuring image data between the two angles.

2.  An apparatus as claimed in claim 1, wherein the means are for, when the comparison determines that the second angle is less than the first angle, not obscuring the image data.

3.  An apparatus as claimed in any preceding claim, wherein the means are for:

    calculating a plurality of travel paths for moving at least part of the apparatus to change a viewpoint of the image data;
    estimating, for at least one travel path, a cost of obscuring to be performed on image data resulting from that travel path; and
    selecting a travel path in dependence on the determined cost of obscuring.

4.  An apparatus as claimed in claim 3, wherein the travel paths comprise movements of a pivoted support in the apparatus that is configured to rotate a lens for capturing the image data relative to the apparatus.

5.  An apparatus as claimed in any of claims 3 and 4, wherein the travel paths comprise macroscopic movements of the apparatus relative to the region of interest.

6.  An apparatus as claimed in any of claims 3 to 5, wherein the means for selecting a travel path is further dependent on an indication of a time limit in which the travel path is to be completed.

7.  An apparatus as claimed in any preceding claim, wherein the means are for:

    using a range finding mechanism to determine the three dimensional information, wherein the imaging system and the range finding mechanism have respective associated fields of view,
    wherein the field of view of the apparatus is the smaller of the field of view of the range finding mechanism and the field of view of the imaging system.

8.  A method comprising:

    receiving image data from an imaging system that includes at least part of an area of interest, wherein the area of interest comprises at least one elevated structure;
    determining a line that extends from the imaging system to a boundary of the area of interest;
    using three dimensional data to find a first angle between the line and a boundary of the at least one elevated structure;
    determining a second angle between the line and a boundary of the field of view of the apparatus;
    comparing the first angle to the second angle; and
    when the comparison determines that the second angle is greater than the first angle, obscuring image data between the two angles.

9. A method as claimed in claim 8, comprising, when the comparison determines that the second angle is less than the first angle, not obscuring the image data.

10. A method as claimed in any of claims 8 to 9, comprising:

   calculating a plurality of travel paths for moving at least part of the apparatus to change a viewpoint of the image data;
   estimating, for at least one travel path, a cost of obscuring to be performed on image data resulting from that travel path; and
   selecting a travel path in dependence on the determined cost of obscuring.

11. A method as claimed in claim 10, wherein the travel paths comprise movements of a pivoted support in an apparatus in which the method is performed, the pivoted support being configured to rotate a lens for capturing the image data relative to the apparatus.

12. A method as claimed in any of claims 10 and 11, wherein the travel paths comprise macroscopic movements of an apparatus in which the method is performed relative to the region of interest.

13. A method as claimed in any of claims 10 to 12, comprising selecting a travel path in dependence on an indication of a time limit in which the travel path is to be completed.

14. A method as claimed in any preceding claim, comprising:

   using a range finding mechanism to determine the three dimensional information, wherein the imaging system and the range finding mechanism have respective associated fields of view,
   wherein the field of view of the apparatus is the smaller of the field of view of the range finding mechanism and the field of view of the imaging system.

15. A computer program comprising instructions for causing an apparatus to perform at least the following:

   receive image data from an imaging system that includes at least part of an area of interest, wherein the area of interest comprises at least one elevated structure;
   determine a line that extends from the imaging system to a boundary of the area of interest;
   use three dimensional data to find a first angle between the line and a boundary of the at least one elevated structure;
   determine a second angle between the line and a boundary of the field of view of the apparatus;
   compare the first angle to the second angle; and
   when the comparison determines that the second angle is greater than the first angle, obscure image data between the two angles

Figure 1

Figure 2

201 - receive image data from an imaging system that includes at least part of an area of interest, wherein the area of interest comprises at least one elevated structure

202 – determine a line that extends from the imaging system to a boundary of the area of interest

203 - use three dimensional data to find a first maximum angle between the line and the at least one elevated structure

204 - a second angle between the line and a boundary of the field of view of the apparatus

205 - compare the first maximum angle to the second angle

206 - when the comparison determines that the second angle is greater than the first maximum angle, obscure image data in a region of the image data between the two angles

Figure 3

EP 3 706 077 A1

Figure 4A

Figure 4B

Figure 4C

EP 3 706 077 A1

## Figure 5

**501 - Drone location, gimbal angle and FOV of camera**

↓

**502 - Select the probable region for comparison**

↓

**503 - Stored video/images. Stored metadata regarding location of images/video frames**

**504 - Image data recording**

↓

**505 - Video analytics for checking if image lies in the area** ← (503)

↓

**505 - are images partially/wholly going beyond area of interest?** → **508**

↓

**506 - Blur the image data**

↓

**507 - Store the image data**

Figure 6

601 - receive image data that includes at least part of an area of interest, wherein image data relating to areas located outside of the area of interest is to be obscured

602 - calculate a plurality of travel paths for moving at least part of the apparatus to change a viewpoint of the image data

603 - estimate, for each travel path, a cost of obscuring to be performed on image data resulting from that travel path

604 - select a travel path in dependence on the determined cost of obscuring.

EP 3 706 077 A1

Figure 7

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2017/132074 A1 (RUSSELL DAVID WAYNE [US]) 3 August 2017 (2017-08-03) * abstract; figures 1,2 * * paragraph [0012] - paragraph [0044] * | 1-15 | INV. G06T7/73 G06T11/00 |
| A | US 2017/300757 A1 (WOLF MACE [US]) 19 October 2017 (2017-10-19) * abstract; figures 1-16 * * paragraph [0003] - paragraph [0010] * * paragraph [0048] - paragraph [0178] * | 1-15 | |
| A | US 2013/162817 A1 (BERNAL EDGAR A [US]) 27 June 2013 (2013-06-27) * abstract; figures 1-7 * * paragraph [0002] - paragraph [0003] * * paragraph [0030] - paragraph [0050] * | 1-15 | |
| A | EP 3 410 391 A1 (GUANGDONG OPPO MOBILE TELECOMMUNICATIONS CORP LTD [CN]) 5 December 2018 (2018-12-05) * abstract; figures 3-7 * * paragraph [0022] - paragraph [0073] * | 1-15 | TECHNICAL FIELDS SEARCHED (IPC) G06T |
| A | IKECHUKWU AZOGU ET AL: "Privacy-preserving license plate image processing", GLOBECOM WORKSHOPS (GC WKSHPS), 2011 IEEE, IEEE, 5 December 2011 (2011-12-05), pages 34-39, XP032124607, DOI: 10.1109/GLOCOMW.2011.6162469 ISBN: 978-1-4673-0039-1 * the whole document * | 1-15 | |

-/--

The present search report has been drawn up for all claims

| Place of search | Date of completion of the search | Examiner |
|---|---|---|
| Munich | 30 August 2019 | Herter, Jochen |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

**EUROPEAN SEARCH REPORT**

Application Number

EP 19 16 1535

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MINHO KIM ET AL: "ViewMap: Sharing Private In-Vehicle Dashcam Videos", USENIX, USENIX, THE ADVANCED COMPUTING SYSTEMS ASSOCIATION , 27 March 2017 (2017-03-27), pages 170-183, XP061025183, Retrieved from the Internet: URL:https://www.usenix.org/sites/default/f iles/nsdi17_proceedings_interior.pdf [retrieved on 2017-03-27] * the whole document * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 30 August 2019 | Herter, Jochen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 19 16 1535

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2019

| Patent document cited in search report | | | Publication date | Patent family member(s) | | | Publication date |
|---|---|---|---|---|---|---|---|
| WO 2017132074 | A1 | | 03-08-2017 | NONE | | | |
| US 2017300757 | A1 | | 19-10-2017 | US | 2017300757 | A1 | 19-10-2017 |
| | | | | US | 2018232580 | A1 | 16-08-2018 |
| US 2013162817 | A1 | | 27-06-2013 | NONE | | | |
| EP 3410391 | A1 | | 05-12-2018 | CN | 107038681 | A | 11-08-2017 |
| | | | | EP | 3410391 | A1 | 05-12-2018 |
| | | | | TW | 201903712 | A | 16-01-2019 |
| | | | | US | 2018350031 | A1 | 06-12-2018 |
| | | | | WO | 2018219072 | A1 | 06-12-2018 |

EPO FORM P0459

For more details about this annex : see Official Journal of the European Patent Office, No. 12/82